(19) Europäisches Patentamt / European Patent Office / Office européen des brevets

(11) **EP 4 501 746 B1**

(12) **EUROPÄISCHE PATENTSCHRIFT**

(45) Veröffentlichungstag und Bekanntmachung des Hinweises auf die Patenterteilung:
**06.08.2025   Patentblatt 2025/32**

(51) Internationale Patentklassifikation (IPC):
**B62D 6/00** *(2006.01)*       **B62D 7/15** *(2006.01)*
**B62D 5/04** *(2006.01)*

(21) Anmeldenummer: **24191096.7**

(22) Anmeldetag: **26.07.2024**

(52) Gemeinsame Patentklassifikation (CPC):
**B62D 9/002; B62D 5/0484; B62D 6/003;**
**B62D 7/159;** B62D 5/003; B62D 9/005

(54) **VERFAHREN ZUR STEUERUNG EINES STEER-BY-WIRE-LENKSYSTEMS, STEUERGERÄT UND KRAFTFAHRZEUG**

METHOD FOR CONTROLLING A STEER-BY-WIRE STEERING SYSTEM, CONTROL DEVICE, AND MOTOR VEHICLE

PROCÉDÉ DE COMMANDE D'UN SYSTÈME DE DIRECTION À COMMANDE ÉLECTRIQUE, APPAREIL DE COMMANDE ET VÉHICULE AUTOMOBILE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **02.08.2023   BE 202305644**

(43) Veröffentlichungstag der Anmeldung:
**05.02.2025   Patentblatt 2025/06**

(73) Patentinhaber:
• **thyssenkrupp Presta Aktiengesellschaft**
  **9492 Eschen (LI)**
• **thyssenkrupp AG**
  **45143 Essen (DE)**

(72) Erfinder:
• **Miano, Dr. Carlo Mario**
  **9492 Eschen (LI)**
• **Lapis, Leonard**
  **9466 Sennwald (CH)**
• **Polmans, Kristof**
  **6464 Tarrenz (AT)**

(74) Vertreter: **thyssenkrupp Intellectual Property GmbH**
  **ThyssenKrupp Allee 1**
  **45143 Essen (DE)**

(56) Entgegenhaltungen:
EP-A1- 4 093 650          EP-B1- 1 351 843
CN-A- 114 919 640        DE-A1- 102004 034 126
DE-A1- 102015 009 241  DE-A1- 102020 100 719
DE-B3- 102022 106 530  US-A1- 2023 121 593
US-B1- 10 899 340

**Beschreibung**

Die Erfindung betrifft ein Verfahren zur Steuerung eines Steer-by-Wire-Lenksystems, ein Steuergerät und ein Kraftfahrzeug.

Bei einem Steer-by-Wire-Lenksystem sind die gelenkten Räder und das Lenkrad nicht mechanisch sondern elektrisch gekoppelt. Die gelenkten Räder werden durch Lenksignale gesteuert. Dabei wird die jeweilige Lenkradstellung von einem Lenkwinkelsensor erfasst. Das entsprechende Lenksignal bewirkt, dass ein Lenksteller die Stellung der gelenkten Räder ändert.

Im Normalbetrieb wird permanent die ordnungsgemäße Funktion des Steer-by-Wire-Lenksystems überprüft. Bei einem Fehler wird das Steer-by-Wire-Lenksystem abgeschaltet und ein Notlenksystem aktiviert, um die Lenkfunktion des Fahrzeugs aufrechtzuerhalten. Dazu können mechanische Hilfssysteme vorgesehen sein, die den Notlenkbetrieb ermöglichen. Die Vorteile des Steer-by-Wire-Lenksystems mit Blick auf Bauraum, Montage, Links- und Rechtslenkervarianten sowie Crash-Verhalten werden dadurch aber praktisch aufgehoben oder zumindest beeinträchtigt.

Ein vollständig elektrisch arbeitendes Notlenksystem ist aus DE 10 2019 129 032 A1 bekannt, das auf die Anmelderin zurückgeht und sich von mechanischen Hilfssystemen durch den Einsatz eines Torque-Vectoringsystems abhebt, so dass auf eine mechanische Verbindung zwischen Lenkrad und gelenkten Rädern verzichtet werden kann. Auch wenn das bekannte System bereits sehr gut funktioniert, besteht Verbesserungsspielraum mit Blick auf eine möglichst genaue Wiederherstellung bzw. Reproduktion des ursprünglichen Fahrverhaltens, wenn das Notlenksystem aktiviert ist.

DE 10 2020 100719 offenbart den Oberbegriff des Anspruchs 1.

Der Erfindung liegt die Aufgabe zu Grunde das aus dem eingangs genannten Stand der Technik bekannte Verfahren dahingehend zu verbessern, dass ohne Einsatz mechanischer Hilfsmittel zur Kopplung des Lenkrads und der gelenkten Räder das ursprüngliche Fahrverhalten im Notlenkbetrieb möglichst genau reproduziert wird. Der Erfindung liegt ferner die Aufgabe zu Grunde, ein entsprechendes Steuergerät sowie ein Kraftfahrzeug anzugeben.

Erfindungsgemäß wird die Aufgabe mit Blick auf das Verfahren durch den Gegenstand des Anspruchs 1, mit Blick auf das Steuergerät durch den Gegenstand des Anspruchs 8 und mit Blick auf das Kraftfahrzeug durch den Gegenstand des Anspruchs 9 gelöst.

Konkret wird die Aufgabe durch ein Verfahren zur Steuerung eines Steer-by-Wire-Lenksystems für ein Kraftfahrzeug in einem Notlenkbetrieb gelöst, wobei das Kraftfahrzeug eine Vorderachse mit Vorderrädern, eine Hinterachse mit Hinterrädern, ein Steer-by-Wire-Lenksystem und ein Torque-Vectoringsystem umfasst. Die Vorderräder und die Hinterräder sind jeweils durch eine Lenkstange verbunden und sind lenkbar. Das Verfahren umfasst die folgenden Schritte:

- Überprüfen des Lenksystems auf Vorliegen eines Fehlerzustandes,

- Durchführen des Notlenkbetriebs zur Beibehaltung des ursprünglichen Fahrzeugverhaltens, wenn ein Fehlerzustand detektiert wird,

wobei im Notlenkbetrieb folgende Schritte ausgeführt werden:

- Bestimmen der Soll-Querbeschleunigung basierend auf der Ist-Lenkradstellung und der Ist-Fahrzeuggeschwindigkeit,

- Bestimmen des Giermoments und daraus eines allgemeinen Radlenkwinkels $\delta_g$ für das ursprüngliche Fahrzeugverhalten, wobei für den allgemeinen Radlenkwinkel $\delta_g$ gilt

$$\delta_g = \delta_f - \delta_r$$

    $\delta_g$ - allgemeiner Radlenkwinkel

    $\delta_f$ - Vorderradlenkwinkel

    $\delta_r$ - Hinterradlenkwinkel

- Bestimmen eines Korrektur-Vorderradlenkwinkels $\Delta\delta_f$ und eines Korrektur-Hinterradlenkwinkels $\Delta\delta_r$ und

- Bestimmen der Antriebsmomente und/oder Bremsmomente für die Vorderräder und die Hinterräder, die durch das Torque-Vectoringsystem entsprechend verteilt werden.

Das erfindungsgemäße Verfahren hat den Vorteil, dass die Funktionalität des Fahrzeugs hinsichtlich des Lenkverhaltens bspw. bei einem Versagen des Lenkstellers bzw. des Aktuators zur Übertragung der Lenkbewegung auf die gelenkten Räder vollständig reproduziert wird. Selbst im nichtlinearen Betriebsbereich des Fahrzeugs werden die Gierratenantwort und die Schwimmwinkelantwort im Notlenkbetrieb wiederhergestellt, so dass die ursprüngliche Fahrrichtung präzise eingehalten wird. Dazu ist vorgesehen, dass die Hinterräder zusätzlich zu den Vorderrädern lenkbar sind. Im Rahmen des Verfahrens wird der allgemeine Radlenkwinkels als Funktion des Vorderradlenkwinkels und des Hinterradlenkwinkels basierend auf dem Giermoment bestimmt. Zu Einstellung des gewünschten Vorderradlenkwinkels und des gewünschten Hinterradlenkwinkels werden die Antriebsmomente und/oder Bremsmomente durch das Torque-Vectoringsystem auf die entsprechenden Vorderräder und Hinterräder verteilt. Der Lenksteller oder andere mechanische Hilfssysteme sind somit im Notlenkbetrieb nicht erforderlich, sodass die Lenkfunktion des Fahrzeugs vollelektrisch aufrechterhalten wird. Die Lenkstangen zwischen den Vorder- und Hinterrädern werden jeweils durch die Momentenverteilung an den Einzelrädern in die gewünschte Lenkposition bewegt.

Die Einbeziehung der Hinterradlenkung in den Notfallbetrieb führt zu einem zusätzlichen Freiheitsgrad, durch den das ursprüngliche Fahrverhalten besonders präzise reproduziert wird.

Die im Zusammenhang mit dem Verfahren genannten Vorteile gelten in entsprechender Weise auch für das erfindungsgemäße Steuergerät. Die im Zusammenhang mit dem Verfahren beschriebenen Verfahrensschritte werden auch im Zusammenhang mit dem Steuergerät offenbart und zwar in der Form, dass das Steuergerät dazu konfiguriert bzw. angepasst ist, diese Verfahrensschritte durchzuführen.

Unter ursprünglicher Fahrrichtung bzw. ursprünglichem Fahrverhalten werden die Fahrrichtung und das Fahrverhalten im Normalbetrieb verstanden. Der Notlenkbetrieb kann durch unterschiedliche Fehler ausgelöst werden, beispielsweise durch ein Versagen des Lenkstellers, der die Lenkstange zwischen den Vorderrädern antreibt, oder durch einen Elektronikfehler des Steer-by-Wire-Lenksystems. Jedenfalls kann durch den Fehlerzustand das ursprüngliche Fahrverhalten im Normalbetrieb nicht aufrechterhalten werden. Die Querbeschleunigung des Fahrzeugs ist die senkrecht zur Fahrzeuglängsachse wirkende Beschleunigung. Das Giermoment ist das um die Hochachse des Fahrzeugs wirkende Moment. Der allgemeine Radlenkwinkel entspricht der Differenz aus dem Vorderradlenkwinkel und dem Hinterradlenkwinkel. Der Vorderradlenkwinkel ist der Winkel zwischen einer Radialebene des Vorderrads senkrecht zur Drehachse des Rads und einer Parallelen zur Fahrzeuglängsachse. Dasselbe gilt entsprechend für das Hinterrad. Der Korrektur-Vorderradlenkwinkel bzw. Korrektur-Hinterradlenkwinkel ist die Stellgröße um den angestrebten allgemeinen Radlenkwinkel zu erreichen und führt zu einer entsprechenden Bewegung der jeweiligen Lenkstange.

Der Schwimmwinkel (slip angle) ist der Winkel zwischen der Bewegungsrichtung des Fahrzeugs und der Fahrzeuglängsachse. Die näherungsweise Bestimmung des Schwimmwinkels ist allgemein bekannt und wird nicht weiter vertieft.

Der Begriff Steuerung wird nicht im regelungstechnisch strengen Sinn verstanden, sondern umfasst auch eine Regelung (closed control). Die Erfindung betrifft also auch ein Verfahren zur Regelung eines Steer-by-Wire-Lenksystems sowie ein entsprechendes Steuergerät.

Das Torque-Vectoringsystem bewirkt eine Drehmomentverteilung auf individuelle Räder, so dass die Vorderräder bzw. die Hinterräder, also das jeweilige linke und rechte Rad, jeweils mit unterschiedlichen Drehmomenten beaufschlagt sind. Dadurch wird in an sich bekannter Weise der Gierwinkel bzw. die Gierrate beeinflusst. Bei den Drehmomenten handelt es sich um Antriebsmomente und/oder Bremsmomente.

Bevorzugte Ausführungsformen der Erfindung sind in den Unteransprüchen angegeben.

So kann das Verfahren den Schritt umfassen: Bestimmen eines Soll-Schwimmwinkels $\beta$ als Zielgröße für den Vorderradlenkwinkel $\delta_f$ und den Hinterradlenkwinkel $\delta_r$. Dies hat den Vorteil, dass die ursprüngliche Fahrrichtung des Fahrzeugs präzise eingehalten wird.

Vorzugsweise umfasst das Verfahren folgenden Schritt: Bestimmen der Giermomentkomponenten aus dem Giermoment für die Antriebsmomente und/oder Bremsmomente für die Vorderräder und die Hinterräder, die durch das Torque-Vectoringsystem entsprechend verteilt werden. Das aktuelle Giermoment wird so durch das Torque-Vectoringsystem präzise abgebildet und auf die Hinterradlenkung und die Vorderradlenkung aufgeteilt.

Das Verfahren kann den Schritt umfassen: Bestimmen des Giermoments basierend auf der Ist-Lenkradstellung und der Ist-Fahrzeuggeschwindigkeit. Das Giermoment kann in an sich bekannter Weise berechnet werden.

Vorzugsweise weist das das Steer-by-Wire-Lenksystem eine Vorderradlenkung auf. Dies hat den Vorteil, dass die Erfindung auf Standardlenksysteme anwendbar ist. Unter einer Vorderradlenkung wird eine Radlenkung verstanden, bei der die Vorderräder aktiv, d. h. mit angetriebener Lenkstange, gelenkt werden. Die Vorderradlenkung umfasst einen Lenksteller bzw. einen entsprechenden Aktuator, der mit der Lenkstange gekoppelt ist. Wenn der Lenksteller bzw. Aktuator versagt, wird die Lenkstange zwischen den Vorderrädern nicht blockiert, sondern kann sich frei bewegen, sodass die Position der Lenkstange durch die Drehmomentverteilung zwischen dem rechten und linken Vorderrad bestimmt wird.

Die Hinterradlenkung ist vorzugsweise antriebsfrei. Die Lenkstange der Hinterradlenkung ist nicht angetrieben, sondern wird ausschließlich durch die Drehmomentverteilung zwischen dem linken und dem rechten Hinterrad bewegt.

Vorzugsweise weist das Kraftfahrzeug Einzelradbremsen auf. Damit kann eine Drehmomentverteilung durch unterschiedliche Bremsmomente bzw. Bremsdrücke an den linken und rechten Einzelrädern erreicht werden. Damit ist auch bei nicht angetriebenen Achsen, beispielsweise der Hinterachse, ein Torque-Vectoring möglich. Einzelradbremsen können auch an den Rädern der angetriebenen Achse, bspw. der Vorderachse, vorgesehen sein, so dass zusätzlich zu den Antriebsmomenten, insbesondere den radindividuellen Antriebsmomenten, individuelle Bremsmomente auf die Einzelräder wirken können. Unter einer Einzelradbremse wird eine Bremse verstanden, die radindividuell ein Bremsmoment in das jeweilige Rad einleitet, das vom Bremsmoment des anderen Rades derselben Achse unabhängig ist.

Das Kraftfahrzeug kann einen Antrieb aufweisen, der auf der Vorderachse angeordnet ist und ein offenes Differentialgetriebe aufweist. Es handelt sich vorzugsweise um einen zentralen Einzelantrieb. Die Erfindung ist damit auf die üblichen Antriebskonzepte anwendbar. Ein offenes Differentialgetriebe ist ohne Sperreinrichtung ausgestattet.

Die Erfindung wird nachstehend anhand eines Ausführungsbeispiels unter Bezug auf die beigefügten schematischen Figuren mit weiteren Einzelheiten näher erläutert.

Dabei zeigen

Fig. 1 ein Fahrzeug mit einer lenkbaren Vorderachse und einer lenkbaren Hinterachse, bei dem ein erfindungsgemäßes Ausführungsbeispiel des Verfahrens zur Steuerung des Steer-by-Wire-Lenksystems implementiert ist, und

Fig. 2 ein Blockdiagramm der Steuerung des anhand Fig. 1 erläuterten Verfahrens.

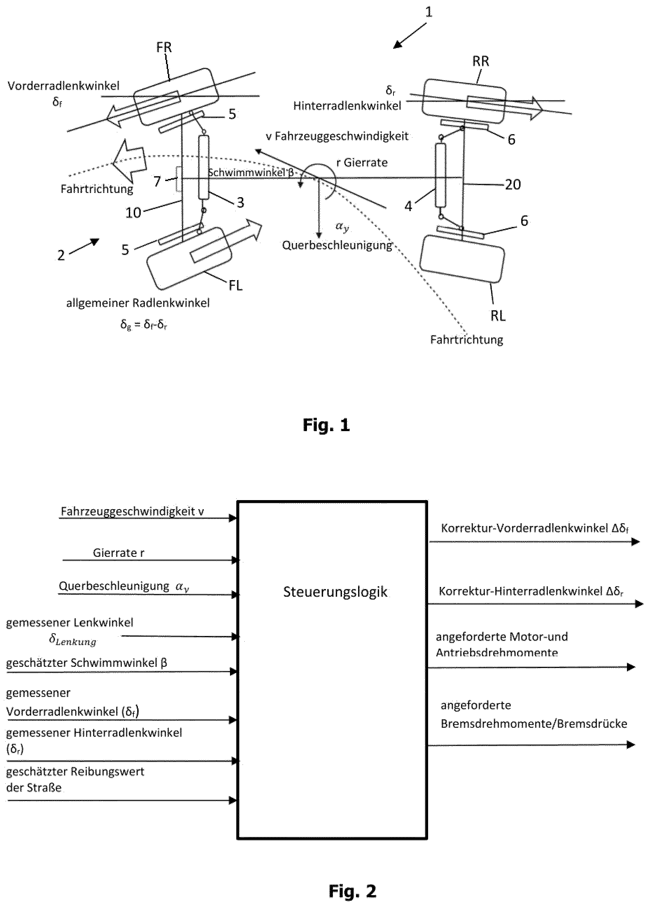

Fig. 1 zeigt in Draufsicht und abstrahierter Weise das Fahrgestell eines Kraftfahrzeugs 1, insbesondere Pkw, bei dem ein erfindungsgemäßes Ausführungsbeispiel des Verfahrens zur Steuerung eines Steer-by-Wire-Lenksystems 2 implementiert ist. Das Fahrzeug weist ein entsprechendes Steuergerät auf (nicht gezeigt), das zur Durchführung des Verfahrens konfiguriert ist.

Das Kraftfahrzeug 1 hat eine Vorderachse 10 mit einem linken Vorderrad FL und einem rechten Vorderrad FR sowie eine Hinterachse 20 mit einem linken Hinterrad RL und einem rechten Hinterrad RR. Die beiden Vorderräder FL, FR sind durch eine erste Lenkstange 3 und die beiden Hinterräder RL, RR durch eine zweite Lenkstange 4 mechanisch verbunden. Sowohl die Vorderräder FL, FR als auch die Hinterräder RL, RR sind lenkbar. Dazu wird in bekannter Weise die jeweilige Lenkstange 3, 4 nach rechts oder links bewegt. Für die Vorderradlenkung ist ein Lenksteller bzw. Aktuator (nicht dargestellt) vorgesehen, der mit der ersten Lenkstange 3 mechanisch verbunden ist und die für die Lenkung erforderliche Antriebskraft zur Verfügung stellt. Der Lenksteller wird im Rahmen des Steer-by-Wire Lenksystems elektronisch angesteuert und ist nicht mit dem Lenkrad mechanisch verbunden. Das Steuersignal erhält der Lenksteller von einem Lenkwinkelsensor, der ein der jeweiligen Lenkradposition entsprechendes Lenksignal ausgibt.

Das Kraftfahrzeug 1 ist mit einem Torque-Vectoring-System ausgestattet, das die angetriebenen Räder individuell mit einem Antriebsmoment versorgt. Im Beispiel gemäß Fig. 1 sind die Vorderräder FL, FR angetrieben. Der Fahrzeugmotor ist auf der Vorderachse 10 angeordnet und mit einem offenen Differenzialgetriebe verbunden. Die Hinterachse 20 ist nicht angetrieben.

Die Hinterachse 20 umfasst Einzelradbremsen 6, die im Rahmen des Torque-Vectoring-Systems radindividuelle Bremsmomente bzw. Bremsdrücke in das linke Hinterrad RL bzw. das rechte Hinterrad RR einleiten. Bei dem Beispiel gemäß Fig. 1 weisen auch die beiden Vorderräder FL, FR Einzelradbremsen 5 auf. Damit können die beiden Vorderräder FL, FR zusätzlich zu den individuellen Antriebsmomenten mit individuellen Bremsmomenten beaufschlagt werden.

Anhand Fig. 1 werden die für das Verfahren wesentlichen Parameter näher erläutert. Wie in Fig. 1 zu sehen, wirkt die Querbeschleunigung $a_y$ senkrecht zur Längsachse des Fahrzeugs. Das Giermoment bzw. die Gierrate wirken um die Hochachse des Fahrzeugs. Die Fahrzeuggeschwindigkeit v wird tangential zur Fahrrichtung bestimmt bzw. gemessen. Die Fahrrichtung verläuft im Beispiel gemäß Fig. 1 bzw. in dem dort gezeigten Betriebszustand in Form einer Linkskurve.

Der Schwimmwinkel (slip angle) β ist der Winkel zwischen der Fahrrichtung des Fahrzeugs und der Fahrzeuglängsachse. Bei dem Beispiel gemäß Fig. 1 wird der Schwimmwinkel β im Bereich des Fahrzeugschwerpunktes erfasst bzw. in an sich bekannter Weise geschätzt. Das Giermoment und die Querbeschleunigung werden ebenfalls im Bereich des Fahrzeugschwerpunktes erfasst. Allgemein werden das Giermoment und die Querbeschleunigung sowie der Schwimmwinkel β an der selben Position der Fahrzeuglängsachse erfasst.

Wie in Fig. 1 gezeigt, sind der Vorderradlenkwinkel bzw. der Hinterradlenkwinkel jeweils zwischen einer Parallelen zur Fahrzeuglängsachse und einer Radialebene gebildet, die sich senkrecht zur Drehachse des jeweiligen Rades erstreckt. Die Radialebene ist eine Ebene, die sich in radialer Richtung des Rades erstreckt. Aus dem Vorderradlenkwinkel und dem Hinterradlenkwinkel wird ein allgemeiner Radlenkwinkel gebildet.

Bei dem Verfahren wird das Lenksystem 2 auf Vorliegen eines Fehlerzustandes überprüft. Wenn ein Fehler, beispielsweise ein Ausfall des Lenkstellers detektiert ist, wird der Notlenkbetrieb eingeleitet, um das ursprüngliche Fahrzeugverhalten zu reproduzieren bzw. aufrechtzuerhalten. Konkret bedeutet dies im Ausführungsbeispiel gemäß Fig. 1, dass die durch den Lenkeinschlag vorgegebene Linkskurve mit der gewünschten Geschwindigkeit so durchfahren wird, als ob das Lenksystem 2 normal arbeitet.

Im Notlenkbetrieb werden die Lenkradstellung sowie die Fahrzeuggeschwindigkeit gemessen und daraus eine Soll-Querbeschleunigung bestimmt. Aus der Ist-Lenkradstellung und der Ist-Fahrzeuggeschwindigkeit wird ferner das Giermoment berechnet aus dem wiederrum ein allgemeiner Radlenkwinkel $\delta_g$ abgeleitet wird, der dem ursprünglichen Fahrzeugverhalten entspricht. Für den allgemeinen Radlenkwinkel $\delta_g$ gilt

$$\delta_g = \delta_f - \delta_r$$

$\delta_g$ - allgemeiner Radlenkwinkel

$\delta_f$ - Vorderradlenkwinkel

$\delta_r$ - Hinterradlenkwinkel

Der allgemeine Radlenkwinkel $\delta_g$ wird also aufgeteilt in den Vorderradlenkwinkel $\delta_f$ und den Hinterradlenkwinkel $\delta_r$. Die Aufteilung kann sich im Verhältnis vorne/hinten etwas ändern, sofern der allgemeine Radlenkwinkel $\delta_g$ eingehalten wird.

Für den Vorderradlenkwinkel $\delta_f$ und den Hinterradlenkwinkel $\delta_r$ werden die entsprechenden Korrekturwerte, also

Korrektur-Vorderradlenkwinkel $\Delta\delta_f$ und
Korrektur-Hinterradlenkwinkel $\Delta\delta_r$

bestimmt. Außerdem werden aus dem Giermoment die entsprechenden Giermomentkomponenten für die Vorderräder FL, FR und die Hinterräder RL, RR bestimmt und daraus die entsprechenden Antriebs- und/oder Bremsmomente, mit denen die Vorderräder FL, FR und die Hinterräder RL, RR durch das Torque-Vectoring-System individuell beaufschlagt werden.

Wenn also der Lenksteller ausfällt, kann sich die erste Lenkstange 3 frei bewegen. Das gilt ebenso für die zweite Lenkstange 4, da diese nicht angetrieben ist. Durch die verteilten Antriebsmomente und/oder Bremsmomente werden die beiden Lenkstange 3, 4 in die gewünschte Position bewegt, sodass das Fahrzeug die erforderliche Giermomentantwort und Schwimmwinkelantwort durchführt. Anhand Fig. 1 ist dies dadurch veranschaulicht, dass das rechte Vorderrad FR ein Antriebsmoment (Pfeil nach vorne) und das linke Vorderrad FL ein Bremsmoment (Pfeil nach hinten) erfährt. Dadurch wird eine vordere Giermomentkomponente erzeugt und die beiden Vorderräder FL, FR werden nach links eingelenkt. Das rechte Hinterrad RR erfährt ein Bremsmoment (Pfeil nach hinten), sodass eine hintere Giermomentkomponente erzeugt und die zweite Lenkstange 4 ebenfalls nach rechts ausgelenkt wird. Das Fahrzeug beschreibt eine Linkskurve entlang der des ursprünglichen Bahnverlaufes.

Bei einer Rechtskurve ist die Drehmomentverteilung umgekehrt.

Fig. 2 zeigt ein Blockdiagramm mit der Steuerungslogik für das Verfahren nach Fig. 1. Demnach gehen als Eingangsgrößen in die Steuerung die Fahrzeuggeschwindigkeit, die Gierrate, und die Querbeschleunigung ein. Weitere Eingangsgrößen sind der gemessene Lenkwinkel, der geschätzte (estimated) Schwimmwinkel $\beta$ des Fahrzeugs, der gemessene Vorderradlenkwinkel, der gemessene Hinterradlenkwinkel sowie der geschätzte Reibungsbeiwert der Straße. Die Ausgangsgrößen sind der Korrektur-Vorderradlenkwinkel $\Delta\delta_f$ und der Korrektur-Hinterradlenkwinkel $\Delta\delta_r$, sowie die angeforderten Motordrehmomente bzw. Antriebsdrehmomente und Bremsdrehmomente bzw. Bremsdrücke.

Bezugszeichenliste

| | |
|---|---|
| 1 | Kraftfahrzeug |
| 2 | Lenksystem |
| 3 | erste Lenkstange |
| 4 | zweite Lenkstange |
| 5, 6 | Einzelradbremsen |
| 7 | Antrieb |
| 10 | Vorderachse |
| 20 | Hinterachse |
| FL | Vorderrad links |
| FR | Vorderrad rechts |
| RL | Hinterrad links |
| RR | Hinterrad rechts |

**Patentansprüche**

1. Verfahren zur Steuerung eines Steer-by-Wire-Lenksystems für ein Kraftfahrzeug (1) in einem Notlenkbetrieb, wobei das Kraftfahrzeug (1) eine Vorderachse (10) mit Vorderrädern (FL, FR), eine Hinterachse (20) mit Hinterrädern (RL, RR), ein Steer-by-Wire-Lenksystem (2) und ein Torque-Vectoringsystem umfasst, wobei die Vorderräder (FL, FR) und die Hinterräder (RL, RR) jeweils durch eine Lenkstange (3, 4) verbunden und lenkbar sind, mit den folgenden Schritten:

   - Überprüfen des Lenksystems (2) auf Vorliegen eines Fehlerzustandes,
   - Durchführen des Notlenkbetriebs zur Beibehaltung des ursprünglichen Fahrzeugverhaltens, wenn ein Fehlerzustand detektiert wird,

   wobei im Notlenkbetrieb folgende Schritte ausgeführt werden:

   - Bestimmen der Soll-Querbeschleunigung,
   - Bestimmen des Giermoments,
   - Bestimmen der Antriebsmomente und/oder Bremsmomente für die Vorderräder (FL, FR) und die Hinterräder (RL, RR), die durch das Torque-Vectoringsystem entsprechend verteilt werden,

   **dadurch gekennzeichnet,**

   **dass** die Soll-Querbeschleunigung basierend auf der Ist-Lenkradstellung und der Ist-Fahrzeuggeschwindigkeit bestimmt wird,
   **dass** aus dem bestimmten Giermoment ein allgemeiner Radlenkwinkels $\delta g$ für das ursprüngliche Fahrzeugverhalten bestimmt wird, wobei für den allgemeinen Radlenkwinkel $\delta g$ gilt

$$\delta g = \delta f \text{-} \delta r,$$

$\delta g$ - allgemeiner Radlenkwinkel,
$\delta f$ - Vorderradlenkwinkel,
$\delta r$ - Hinterradlenkwinkel;

und **dass** ein Korrektur-Vorderradlenkwinkel $\Delta \delta f$ und ein Korrektur-Hinterradlenkwinkel $\Delta \delta r$ bestimmt wird.

2. Verfahren nach Anspruch 1
**gekennzeichnet durch**
Bestimmen eines Soll-Schwimmwinkels $\beta$ als Zielgröße für den Vorderradlenkwinkel $\delta_f$ und den Hinterradlenkwinkel $\delta_r$.

3. Verfahren nach Anspruch 1 oder 2
**gekennzeichnet durch**
Bestimmen der Giermomentkomponenten aus dem Giermoment für die Antriebsmomente und/oder Bremsmomente für die Vorderräder (FL, FR) und die Hinterräder (RL, RR), die **durch** das Torque-Vectoringsystem entsprechend verteilt werden.

4. Verfahren nach einem der vorhergehenden Ansprüche
**gekennzeichnet durch**
Bestimmen des Giermoments basierend auf der Ist-Lenkradstellung und der Ist-Fahrzeuggeschwindigkeit.

5. Verfahren nach einem der vorhergehenden Ansprüche
**dadurch gekennzeichnet, dass**
das Steer-by-Wire-Lenksystem eine Vorderradlenkung umfasst.

6. Verfahren nach einem der vorhergehenden Ansprüche
**dadurch gekennzeichnet, dass**
das Kraftfahrzeug Einzelradbremsen (5, 6) aufweist.

7. Verfahren nach einem der vorhergehenden Ansprüche
**dadurch gekennzeichnet, dass**
das Kraftfahrzeug einen Antrieb (7) aufweist, der auf der Vorderachse (10) angeordnet ist und ein offenes Differentialgetriebe aufweist.

8. Steuergerät zur Steuerung eines Steer-by-Wire-Lenksystems für ein Kraftfahrzeug (1) in einem Notlenkbetrieb, wobei das Kraftfahrzeug (1) eine Vorderachse (10) mit Vorderrädern (FL, FR), eine Hinterachse (20) mit Hinterrädern (RL, RR), ein Steer-by-Wire-Lenksystem (2) und ein Torque-Vectoringsystem umfasst, wobei die Vorderräder (FL, FR) und die Hinterräder (RL, RR) jeweils durch eine Lenkstange (3, 4) verbunden und lenkbar sind, wobei das Steuergerät zur Durchführung folgender Schritte angepasst ist:

- Überprüfen des Lenksystems (2) auf Vorliegen eines Fehlerzustandes,
- Durchführen des Notlenkbetriebs zur Beibehaltung des ursprünglichen Fahrzeugverhaltens, wenn ein Fehlerzustand detektiert wird,

wobei im Notlenkbetrieb folgende Schritte ausgeführt werden:

- Bestimmen der Soll-Querbeschleunigung,
- Bestimmen des Giermoments,
- Bestimmen der Antriebsmomente und/oder Bremsmomente für die Vorderräder (FL, FR) und die Hinterräder (RL, RR), die durch das Torque-Vectoringsystem entsprechend verteilt werden,

**dadurch gekennzeichnet, dass** das Steuergerät weiter zur Durchführung folgender Schritte angepasst ist:

- Bestimmen der Soll-Querbeschleunigung basierend auf der Ist-Lenkradstellung und der Ist-Fahrzeuggeschwindigkeit,
- aus dem bestimmten Giermoment Bestimmen eines allgemeinen Radlenkwinkels $\delta_g$ für das ursprüngliche Fahrzeugverhalten, wobei für den allgemeinen Radlenkwinkel $\delta_g$ gilt

$$\delta_g = \delta_f \text{-} \delta_r,$$

$\delta_g$ - allgemeiner Radlenkwinkel,
$\delta_f$ - Vorderradlenkwinkel,
$\delta_r$ - Hinterradlenkwinkel,

- Bestimmen eines Korrektur-Vorderradlenkwinkels $\Delta \delta_f$ und eines Korrektur-Hinterradlenkwinkels $\Delta \delta_r$.

9. Kraftfahrzeug mit einem Steuergerät nach Anspruch 8.

**Claims**

1. Method for controlling a steer-by-wire steering system for a motor vehicle (1) in emergency steering operation, wherein the motor vehicle (1) comprises a front axle (10) with front wheels, (FL, FR), a rear axle (20) with rear wheels (RL, RR), a steer-by-wire steering system (2) and a torque vectoring system, wherein the front wheels (FL, FR) and the rear wheels (RL, RR) are each connected by a steering rod (3, 4) and are steerable, comprising the following steps:

- checking the steering system (2) for the presence of a fault state,
- performing the emergency steering operation to maintain the original driving behaviour if a fault state is detected,

wherein the following steps are carried out in emergency steering operation:

- determining the target lateral acceleration,
- determining the yaw moment,
- determining the drive torques and/or braking torques for the front wheels (FL, FR) and the rear wheels (RL, RR), which are distributed appropriately by the torque vectoring system,

**characterized in that**

the target lateral acceleration is determined on the basis of the current steering wheel position and the current vehicle speed,
a general wheel steering angle $\delta_g$ for the original driving behaviour is determined from the determined yaw moment, wherein, for the general wheel steering angle $\delta_g$

$$\delta_g = \delta_f - \delta_r,$$

$\delta_g$ - general wheel steering angle,
$\delta_f$ - front wheel steering angle,
$\delta_r$ - rear wheel steering angle;

and a front wheel steering angle correction $\Delta\delta_f$ and a rear wheel steering angle correction $\Delta\delta_r$ is determined.

2. Method according to Claim 1,
**characterized by**
determining a target slip angle $\beta$ as a target variable for the front wheel steering angle $\delta_f$ and the rear wheel steering angle $\delta_r$.

3. Method according to Claim 1 or 2,
**characterized by**
determining the yaw moment components from the yaw moment for the drive torques and/or braking torques for the front wheels (FL, FR) and the rear wheels (RL, RR), which are distributed appropriately by the torque vectoring system.

4. Method according to one of the preceding claims,
**characterized by**
determining the yaw moment on the basis of the current steering wheel position and the current vehicle speed.

5. Method according to one of the preceding claims
**characterized in that**
the steer-by-wire steering system comprises front wheel steering.

6. Method according to one of the preceding claims,
**characterized in that**
the motor vehicle has individual wheel brakes (5, 6).

7. Method according to one of the preceding claims,
**characterized in that**
the motor vehicle has a drive (7), which is arranged on the front axle (10) and has an open differential gear mechanism.

8. Control device for controlling a steer-by-wire steering system for a motor vehicle (1) in emergency steering operation, wherein the motor vehicle (1) comprises a front axle (10) with front wheels, (FL, FR), a rear axle (20) with rear wheels (RL, RR), a steer-by-wire steering system (2) and a torque vectoring system, wherein the front wheels (FL, FR) and the rear wheels (RL, RR) are each connected by a steering rod (3, 4) and are steerable, wherein the control device is adapted to perform the following steps:

- checking the steering system (2) for the presence of a fault state,
- performing the emergency steering operation to maintain the original driving behaviour if a fault state is detected,

wherein the following steps are carried out in emergency steering operation:

- determining the target lateral acceleration,
- determining the yaw moment,
- determining the drive torques and/or braking torques for the front wheels (FL, FR) and the rear wheels (RL, RR), which are distributed appropriately by the torque vectoring system,

**characterized in that** the control device is further adapted to perform the following steps:

- determining the target lateral acceleration on the basis of the current steering wheel position and the current vehicle speed,
- determining the yaw moment and, from this, a general wheel steering angle $\delta_g$ for the original driving behaviour, wherein, for the general wheel steering angle $\delta_g$,

$$\delta_g = \delta_f - \delta_r,$$

$\delta_g$ - general wheel steering angle,

$\delta_f$ - front wheel steering angle,
$\delta_r$ - rear wheel steering angle,

- determining a front wheel steering angle correction $\Delta\delta_f$ and a rear wheel steering angle correction $\Delta\delta_r$.

9. Motor vehicle having a control device according to Claim 8.

**Revendications**

1. Procédé de commande d'un système de direction à commande électrique pour un véhicule automobile (1) en mode de direction d'urgence, dans lequel le véhicule automobile (1) comprend un essieu avant (10) avec des roues avant (FL, FR), un essieu arrière (20) avec des roues arrière (RL, RR), un système de direction à commande électrique (2) et un système de vectorisation de couple, dans lequel les roues avant (FL, FR) et les roues arrière (RL, RR) sont chacune reliées par une biellette de direction (3, 4) et sont orientables, comprenant les étapes suivantes :

- vérifier la présence d'un état défaillance dans le système de direction (2),
- exécuter le mode de direction d'urgence pour maintenir le comportement de conduite initial si un état de défaillance est détecté,

ce mode comprenant :

- déterminer l'accélération latérale cible,
- déterminer le moment de lacet,
- déterminer les couples d'entraînement et/ou de freinage des roues avant (FL, FR) et des roues arrière (RL, RR), qui sont distribués de manière appropriée par le système de vectorisation du couple,

**caractérisé en ce que**

l'accélération latérale cible est déterminée sur la base de la position actuelle du volant et de la vitesse actuelle du véhicule,
à partir du moment de lacet déterminé, un angle général de braquage des roues $\delta_g$ décrivant le comportement de conduite original est déterminé, dans lequel, pour l'angle général de braquage des roues $\delta_g$

$$\delta_g = \delta_f - \delta_r,$$

$\delta_g$- angle général de braquage des roues,
$\delta_f$- angle de braquage des roues avant,
$\delta_r$- angle de braquage des roues arrière;

et une correction de l'angle de braquage des roues avant $\Delta\delta_f$ et une correction de l'angle de braquage des roues arrière $\Delta\delta_r$ sont déterminées.

2. Procédé selon la revendication 1,
**caractérisé par**
la détermination d'un angle de glissement cible $\beta$ en tant que variable cible pour l'angle de braquage des roues avant $\delta_f$ et l'angle de braquage des roues arrière $\delta_r$.

3. Procédé selon la revendication 1 ou 2,
**caractérisé par**
déterminer les composantes du moment de lacet à partir du moment de lacet pour les couples d'entraînement et/ou les couples de freinage pour les roues avant (FL, FR) et les roues arrière (RL, RR), qui sont distribués de manière appropriée par le système de vectorisation du couple.

4. Procédé selon l'une des revendications précédentes,
**caractérisé par**
la détermination du moment de lacet sur la base de la position actuelle du volant et de la vitesse actuelle du véhicule.

5. Procédé selon l'une des revendications précédentes
**caractérisé par le fait que**
le système de direction à commande électrique comprend une direction des roues avant.

6. Procédé selon l'une des revendications précédentes,
**caractérisé en ce que**
le véhicule à moteur comporte des freins de roue individuels (5, 6).

7. Procédé selon l'une des revendications précédentes,
**caractérisé en ce que**
le véhicule à moteur est équipé d'un entraînement (7) placé sur l'essieu avant (10) et doté d'un mécanisme d'engrenage différentiel ouvert.

8. Dispositif de commande d'un système de direction à commande électrique pour un véhicule automobile (1) en mode de direction d'urgence, dans lequel le véhicule automobile (1) comprend un essieu avant (10) avec des roues avant (FL, FR), un essieu arrière (20) avec des roues arrière (RL, RR), un système de direction à commande électrique (2) et un système de vectorisation de couple, dans lequel les roues avant (FL, FR) et les roues arrière (RL, RR) sont chacune reliées par une biellette de direction (3, 4) et sont orientables, dans lequel le dispositif de commande est adapté pour effectuer les étapes suivantes :

- vérifier la présence d'un état de défaillance dans le système de direction (2),
- exécuter le mode de direction d'urgence pour maintenir le comportement de conduite initial si un état de défaillance est détecté,

dans lequel les étapes suivantes sont exécutées lors du mode de direction d'urgence :

- déterminer l'accélération latérale cible,
- déterminer le moment de lacet,
- déterminer les couples d'entraînement et/ou les couples de freinage appliqués aux roues avant (FL, FR) et aux roues arrière (RL, RR), qui sont distribués de manière appropriée par le système de vectorisation du couple,

**caractérisé en ce que** le dispositif de commande est en outre adapté pour effectuer les étapes suivantes :

- déterminer l'accélération latérale cible sur la base de la position actuelle du volant et de la vitesse actuelle du véhicule,
- déterminer, à partir du moment de lacet, un angle général de braquage des roues $\delta_g$ pour le comportement de conduite original, dans lequel, pour l'angle général de braquage des roues $\delta_g$,

$$\delta_g = \delta_f - \delta_r,$$

$\delta_g$- angle général de braquage des roues,
$\delta_f$- angle de braquage des roues avant,
$\delta_r$- angle de braquage des roues arrière,

- déterminer une correction de l'angle de braquage des roues avant $\Delta\delta_f$ et une correction de l'angle de braquage des roues arrière $\Delta\delta_r$.

9. Véhicule autombilie comportant un dispositif de commande selon la revendication 8.

**Fig. 1**

**Fig. 2**

**IN DER BESCHREIBUNG AUFGEFÜHRTE DOKUMENTE**

**In der Beschreibung aufgeführte Patentdokumente**

- DE 102019129032 A1
- DE 102020100719